# EUROPEAN PATENT SPECIFICATION

(11) **EP 0 589 573 B1**
(45) Date of publication and mention of the grant of the patent: **20.05.1998**
(21) Application number: 93306871.0
(22) Date of filing: 31.08.1993
(51) Int. Cl.: G01F 23/76

(54) **A float for a liquid level operated device**
Schwimmer für eine durch den Füllstand betätigte Vorrichtung
Flotteur pour un dispositif actionné par le niveau d'un liquide

(30) Priority: 19.09.1992 GB 9219838
(43) Date of publication of application: 30.03.1994
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE)
(72) Inventor: Shortis, Steven, Billericay, Essex CM12 9NF (GB)
(74) Representative: Messulam, Alec Moses

(56) References cited:
- FR-A- 2 655 729
- US-A- 3 012 437
- US-A- 4 627 378

## Description

This invention relates to a float for a liquid level operated device and to a liquid level operated device incorporating a float. The liquid level operated device may be a liquid level gauge and, more particularly, the liquid level gauge may be a fuel level gauge for a motor vehicle fuel tank. The invention is not however restricted to use as part of a gauge.

Liquid level operated devices which use a float mounted on the end of a float arm, with the arm being pivoted to a fixed point, are well known. The buoyancy of the float causes it to float on the surface of the liquid and to rise or fall with the changing liquid level, resulting in rotational movement of the float arm about its pivot axis.

According to the present invention there is provided a float for a liquid level operated device, the float having a substantially flat face and a centre of buoyancy which is closer to one peripheral edge of the flat face than it is to an opposite edge thereof, and wherein means are provided for mounting the float in a fixed position on the end of a float arm so that when the float arm is in its lowermost position, the flat face is substantially horizontal and when the float arm is in its uppermost position, said one peripheral edge of the flat face is uppermost.

By 'flat' we mean that the face has a major plane in which the face extends and that this plane will lie parallel to the liquid surface when the float is floating on the surface. Some parts of the surface may however lie outside this major plane but generally will not extend below the plane when the float is floating with the face downward.

With a float of this shape, when the float arm is in its lowermost position the flat face floats on the liquid surface and the float therefore has a minimum immersed depth. The float can therefore follow the liquid level down to a position at which there is only a very small depth of liquid above the floor of a reservoir in which the liquid is contained.

On the other hand, because the centre of buoyancy is close to the edge of the float which will be uppermost when the liquid level is near its maximum, the float will float in the liquid with its long dimension perpendicular to the liquid surface so that the height of that part of the float which lies above the liquid surface is a minimum.

The combination of these two features allows the float to follow the liquid level right down to the last remaining quantity in the reservoir, and also allows a top, enclosing wall of the reservoir to be only a small distance above the maximum liquid level in the reservoir.

In a preferred form, the float is wedge-shaped and has a triangular cross-section in a plane perpendicular to the flat face. The triangular cross-section is preferably that of an isosceles triangle, with the base of the triangle being very much shorter than the two equal sides, and the flat face being one of the two equal sides.

The float is preferably produced by blow-moulding. To avoid the centre of the flat face bowing outwardly after moulding, it is preferred to design the flat face with an inwardly extending dishing.

The float is preferably made of acetal.

The means for mounting the float on a float arm may comprise peripheral, integrally moulded lugs into which a float arm, typically in the form of a thin rod, can be snap-fitted.

In a second aspect of the invention, there is provided a liquid level operated device comprising a housing, a mechanism contained in the housing and a float arm pivoted to the housing, the float arm having mounted to its free end a float as set forth above, and the arm being associated with the mechanism in a manner such that pivoting movement of the arm results in operation of the mechanism.

The mechanism may for example be a valve which is operated to open or close the valve at a pre-determined liquid level. Alternatively the mechanism may be a fuel level gauge which produces a signal indicative of liquid level to a remote indicator device. In this latter embodiment, the liquid level operated device is particularly suitable for use as a fuel level indicator for a motor vehicle fuel tank.

The invention will now be further described, by way of example, with reference to the accompanying drawings, in which:
Figure 1 shows a cross-section through a motor vehicle fuel tank which incorporates a liquid level operated device in accordance with the invention;
Figure 2 schematically illustrates the range of movement of a float in accordance with the invention mounted on a float arm;
Figure 3 is a perspective view of a float in accordance with the invention mounted on the end of a float arm; and
Figure 4 is a cross-section through the float of Figure 3 on the line IV-IV.

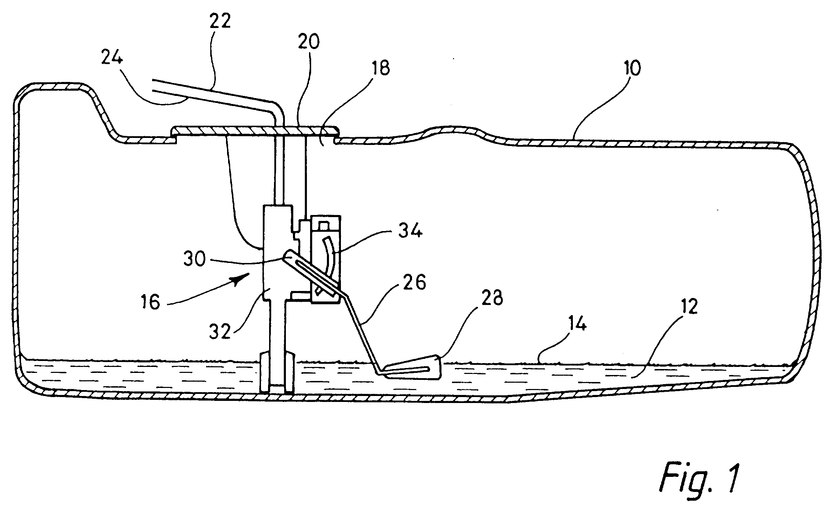

A fuel tank 10 shown in Figure 1 contains liquid fuel 12 filled to a liquid level 14. Located inside the tank is a fuel sender assembly 16 which is inserted into the tank through an opening 18 and depends from a closure plate 20. Electrical connections 22 and 24 extend out of the top of the tank and lead to a remote fuel level indicating device, for example a fuel gauge on a motor vehicle dashboard.

The fuel sender unit 16 comprises a float arm 26 with a float 28 at its free end. The other end of the float arm 26 is pivoted at 30 to a housing 32, and the float arm carries an electrical contact (not shown in Figure 1) which moves across a resistor track 34 which is secured to the housing 32. The electrical signal produced in the lines 22, 24 will vary in accordance with the position at which the contact touches the resistor track 34 and as a result the remote indicator will show a reading which corresponds to the level of fuel in the tank.

The float 28 floats on the fuel surface 14. When the tank is refilled, the float will rise to near the top of the tank, and as the fuel is consumed the float will follow the fuel level and gradually fall towards the bottom of the tank.

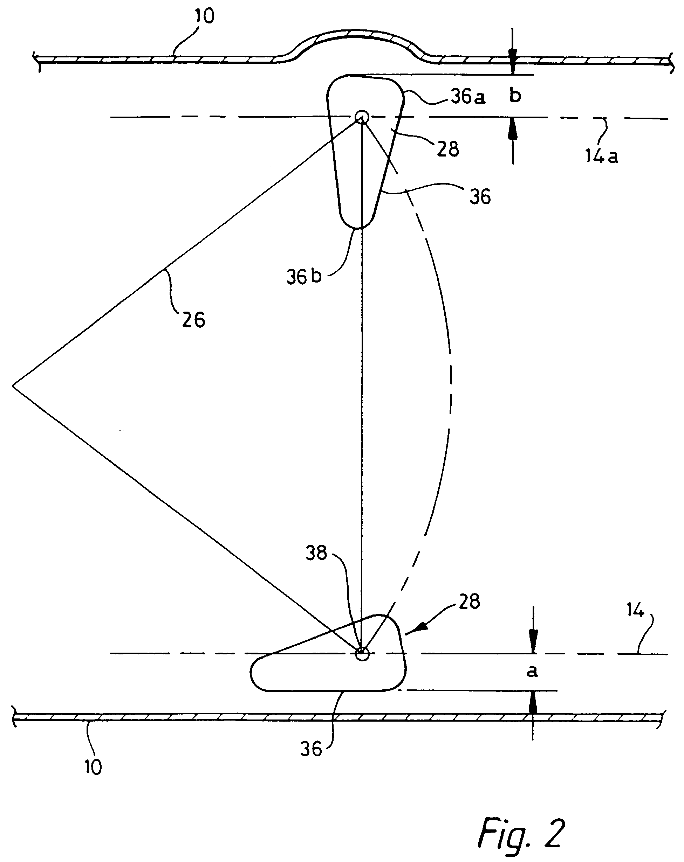

The shape of the float 28 is significant to this invention. As can be seen in Figure 2, the float is of a generally wedge-like shape and has one flat face 36. When the float is in its fully lowered position, the flat face 36 will lie substantially horizontally so that the bottom of the float lies parallel with the fuel surface and, in most cases, parallel with the bottom of the tank 10. The centre of buoyancy of the float is indicated at 38, and this point (in the embodiment shown) will lie on the fuel surface 14 with the result that the float 28 will be immersed to a distance a. The distance a is relatively small.

When the fuel level rises to its upper level as indicated at 14a, the float will rise on the fuel surface. However because the float is rigidly attached to the arm 26, movement of the arm from the lower position to the upper position will be accompanied by a rotation of the float 28. The float will therefore lie with its major axis substantially vertically when it is in the upper position, and the centre of buoyancy 38 which is closer to the edge 36a of the face 36 than it is to the opposite edge 36b will result in the float projecting above the liquid level by a distance b. Again, this distance b is relatively small. As a result the roof of the tank 10 can be relatively close to the upper maximum fuel level 14a.

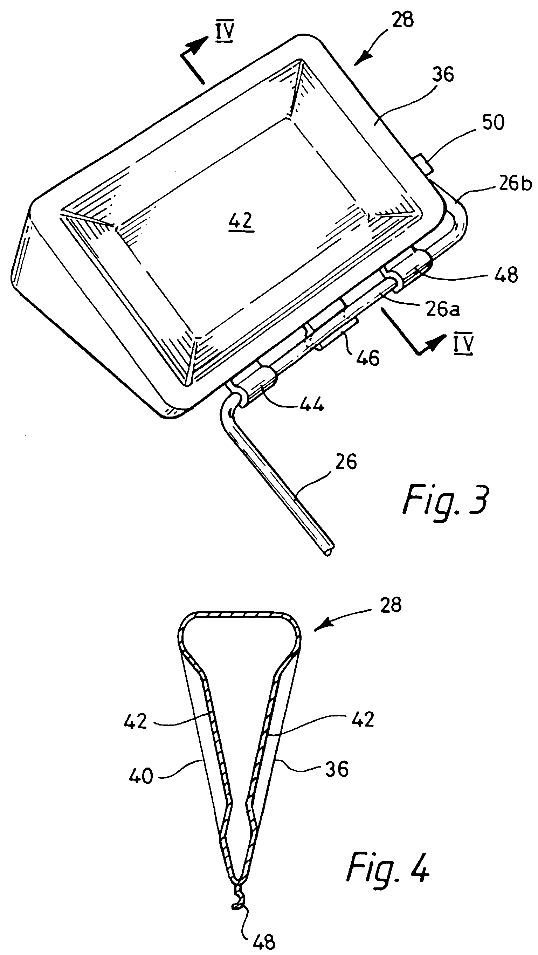

The construction of the float 28 itself is shown in Figures 3 and 4. The float is a hollow plastics moulding, preferably of acetal which has particularly satisfactory resistance to motor vehicle fuel.

The float shown in the drawings is symmetrical about a central plane so that it can be mounted either way up without altering its function.

If the major side faces 36 and 40 of the float were moulded in a flat condition, then there would be a likelihood that the faces would bow outwards under certain conditions, particularly if the internally trapped gas expanded as a result of a temperature rise. In order to avoid this happening, the faces 36, 40 are moulded with a central depression 42 as can be seen in Figures 3 and 4.

Figure 3 also shows how the float arm rod 26 is connected to the float, without piercing the internal cavity of the float. Around the periphery of the float, on two sides thereof, lugs 44, 46 and 48 are moulded. The lugs 44 and 48 are open in one direction and the lug 46 between them is open in the opposite direction, so that the rod 26 can be snapped in and held between these three lugs. An arrangement of three lugs is also provided on the right hand end (viewed in Figure 3) of the float. These lugs (only one of which can be partly seen at 50 in Figure 3) are shaped so that the rod 26 has to be axially inserted into the lugs. Because the float arm 26 is secured to the float in this way, on the limbs 26a and 26b of the rod, these limbs being at right angles to one another, the rod is firmly secured to the float.

## Claims

1. A float for a liquid level operated device, the float being characterised by having a substantially flat face (36) and a centre of buoyancy (38) which is closer to one peripheral edge (36a) of the flat face (36) than it is to an opposite edge (36b) thereof, and wherein means (44, 46, 48, 50) are provided for mounting the float in a fixed position on the end of a float arm (26) so that when the float arm is in its lowermost position, the flat face is substantially horizontal and when the float arm is in its uppermost position, said one peripheral edge (36a) of the flat face is uppermost.

2. A float as claimed in Claim 1, which is wedge-shaped and has a triangular cross-section in a plane perpendicular to the flat face (36).

3. A float as claimed in Claim 2, characterised in that the triangular cross-section is that of an isosceles triangle, with the base of the triangle being very much shorter than the two equal sides, and the flat face (36) being one of the two equal sides.

4. A float as claimed in any preceding claim, characterised in that the float (28) is produced by blow-moulding.

5. A float as claimed in any preceding claim, characterised in that the flat face (36) of the float (28) is inwardly dished (at 42).

6. A float as claimed in any preceding claim, which is made of acetal.

7. A float as claimed in any preceding claim, characterised in that the means for mounting the float on a float arm comprises peripheral, integrally moulded lugs (44, 46, 48, 50) into which the float arm (26) can be snap-fitted.

8. A liquid level operated device comprising a housing (32), a mechanism contained in the housing and a float arm (26) pivoted to the housing, the float arm having mounted to its free end a float (28) as claimed in any preceding claim, and the arm being associated with the mechanism in a manner such that pivoting movement of the arm results in operation of the mechanism.

9. A liquid level operated device as claimed in Claim 8, characterised in that the mechanism is a valve and the float arm operates to open or close the valve at a pre-determined liquid level.

10. A liquid level operated device as claimed in Claim 8, characterised in that the mechanism is a fuel level gauge which produces a signal indicative of liquid level to a remote indicator device.

## Patentansprüche

1. Ein Schwimmer für ein durch den Flüssigkeitsstand gesteuertes Gerät, wobei der Schwimmer durch den Besitz einer im wesentlichen flachen Seite (36) und eines Auftriebpunktes (38), der sich näher an einer peripheren Kante (36a) der flachen Seite (36) befindet als an einer dazu entgegengesetzten Kante (36b), gekennzeichnet ist, und worin eine Vorrichtung (44, 46, 48, 50) für die Befestigung des Schwimmers in einer starren Position an dem Ende eines Schwimmerarms (26) bereitgestellt ist, so daß, wenn sich der Schwimmerarm in seiner tiefsten Position befindet, die flache Seite im wesentlichen horizontal liegt, und wenn sich der Schwimmerarm in seiner höchsten Position befindet, diese eine periphere Kante (36a) der flachen Seite am höchsten liegt.

2. Ein Schwimmer nach Anspruch 1, der keilförmig ist und einen dreieckigen Querschnitt entlang einer zu der flachen Seite (36) senkrechten Ebene besitzt.

3. Ein Schwimmer nach Anspruch 2, dadurch gekennzeichnet, daß der dreieckige Querschnitt der eines gleichschenkeligen Dreiecks ist, wobei die Basis des Dreiecks sehr viel kürzer als die beiden gleichen Seiten und die flache Seite (36) eine der beiden gleichen Seiten ist.

4. Ein Schwimmer nach irgendeinem der vorhergehenden Ansprüche, dadurch gekennzeichnet, daß der Schwimmer (28) durch Blasformen hergestellt wird.

5. Ein Schwimmer nach irgendeinem der vorhergehenden Ansprüche, dadurch gekennzeichnet, daß die flache Seite (36) des Schwimmers (28) nach innen gewölbt ist (bei 42).

6. Ein Schwimmer nach irgendeinem der vorhergehenden Ansprüche, der aus Acetal hergestellt ist.

7. Ein Schwimmer nach irgendeinem der vorhergehenden Ansprüche, dadurch gekennzeichnet, daß die Vorrichtung, um den Schwimmer an einem Schwimmerarm zu befestigen, periphere, integral gegossene Ansätze (44, 46, 48, 50) umfaßt, zwischen die der Schwimmerarm (26) schnappend eingepaßt werden kann.

8. Ein durch den Flüssigkeitsstand gesteuertes Gerät, das ein Gehäuse (32), einen in dem Gehäuse enthaltenen Mechanismus und einen drehbar an dem Gehäuse gelagerten Schwimmerarm (26) umfaßt, wobei der Schwimmerarm an seinem freien Ende einen Schwimmer (28) nach irgendeinem der vorhergehenden Ansprüche besitzt und der Arm mit dem Mechanismus in einer solchen Weise verbunden ist, daß eine Drehbewegung des Armes in einer Betätigung des Mechanismus resultiert.

9. Ein durch den Flüssigkeitsstand gesteuertes Gerät nach Anspruch 8, dadurch gekennzeichnet, daß der Mechanismus ein Ventil ist und der Schwimmerarm zum Öffnen oder Schließen des Ventils bei einem vorbestimmten Flüssigkeitsstand dient.

10. Ein durch den Flüssigkeitsstand gesteuertes Gerät nach Anspruch 8, dadurch gekennzeichnet, daß der Mechanismus ein Treibstoffstandsmeßgerät ist, das ein für den Treibstoffstand repräsentatives Signal für ein entferntes Anzeigegerät erzeugt.

## Revendications

1. Flotteur pour un dispositif asservi à un niveau de liquide, le flotteur étant caractérisé en ce qu'il présente une face pratiquement plate (36) et un centre de poussée (38) qui est plus près d'un premier bord périphérique (36a) de la face plate (36) qu'il ne l'est d'un bord opposé (36b) de celle-ci, et dans lequel des moyens (44, 46, 48, 50) sont prévus afin de permettre de monter le flotteur en position fixe sur l'extrémité d'un bras de flotteur (26), de sorte que quand le bras de flotteur est dans sa position la plus basse, la face plate est pratiquement horizontale, et que lorsque le bras de flotteur est dans sa position la plus haute, ledit premier bord périphérique (36a) de la face plate est le plus haut.

2. Flotteur selon la revendication 1, qui présente la forme d'un coin et présente une section transversale triangulaire dans un plan perpendiculaire à la face plate (36).

3. Flotteur selon la revendication 2, caractérisé en ce que la section transversale triangulaire est celle d'un triangle isocèle, la base du triangle étant beaucoup plus courte que les deux côtés égaux, et la face plate (36) formant l'un des deux côtés égaux.

4. Flotteur selon l'une quelconque des revendications précédentes, caractérisé en ce que le flotteur (28) est réalisé par moulage par soufflage.

5. Flotteur selon l'une quelconque des revendications précédentes, caractérisé en ce que la face plate (36) du flotteur (28) est emboutie vers l'intérieur (en 42).

6. Flotteur selon l'une quelconque des revendications précédentes, qui est fait d'acétal.

7. Flotteur selon l'une quelconque des revendications précédentes, caractérisé en ce que les moyens permettant de monter le flotteur sur un bras de flotteur comprennent des pattes périphériques, moulées en bloc (44, 46, 48, 50) dans lesquelles le bras de flotteur (26) peut être enclenché par pression.

8. Dispositif asservi à un niveau de liquide comprenant un boîtier (32), un mécanisme logé dans le boîtier et un bras de flotteur (26) monté de façon pivotante sur le boîtier, le bras de flotteur comprenant, monté sur son extrémité libre, un flotteur (28) selon l'une quelconque des revendications précédentes, et le bras étant associé au mécanisme de telle façon que le mouvement pivotant du bras provoque la mise en oeuvre du mécanisme.

9. Dispositif asservi à un niveau de liquide selon la revendication 8, caractérisé en ce que le mécanisme est un robinet, et que le bras de flotteur fonctionne pour ouvrir ou fermer le robinet à un niveau de liquide prédéterminé.

10. Dispositif asservi à un niveau de liquide selon la revendication 8, caractérisé en ce que le mécanisme est une jauge de niveau de carburant qui produit un signal représentatif du niveau du liquide et l'adresse à un dispositif indicateur distant.
